# EUROPÄISCHE PATENTANMELDUNG

(11) **EP 0 732 167 A2**
(43) Veröffentlichungstag der Anmeldung: **18.09.1996**
(21) Anmeldenummer: 96103309.9
(22) Anmeldetag: 04.03.1996
(51) Int. Cl.: B23K 9/20

(54) **Schweissverfahren für das Hubzündungsbolzenschweissen**

(30) Priorität: 14.03.1995 DE 19509172
(71) Anmelder: TRW NELSON BOLZENSCHWEISSTECHNIK GMBH & CO. KG, D-58285 Gevelsberg (DE)
(72) Erfinder: Schwiete, Bernd, 58454 Witten (DE); Citrich, Ulrich, 58285 Gevelsberg (DE); Madsak, Jürgen, 58339 Breckerfeld (DE)
(74) Vertreter: Eder, Thomas, Dr.-Ing.

(57) **Zusammenfassung**

Die Erfindung bezieht sich auf ein Schweißverfahren, für das Hubzündungsbolzenschweißen, bei dem nach dem Zünden den Hauptstromlichtbogens dessen Spannung (Uₕ) gemessen und abhängig von der gemessenen Spannung der Stromverlauf des weiteren Hauptstromlichtbogens und/oder die Eintauchbewegung der zu verschweißenden Teile (9, 11) geregelt oder gesteuert wird.

## Beschreibung

Die Erfindung betrifft ein Schweißverfahren für das Hubzündungsbolzenschweißen sowie eine Bolzenschweißvorrichtung zur Durchführung des Verfahrens.

Bei dem seit langer Zeit bekannten Hubzündungsbolzenschweißverfahren wird das mit einem Werkstück Zu verschweißende Teil zunächst mittels eines Schweißkopfes, welcher als Bolzenschweißpistole ausgebildet sein kann, auf das Werkstück aufgesetzt und nach dem Einschalten eines Vorstroms von ca. 10 bis 100 A vom Werkstück abgehoben, so daß sich ein Vorstromlichtbogen ausbildet. Nach diesem Ziehen des Vorstromlichtbogens wird die Stromstärke um ein Vielfaches bis auf den Wert des Stroms für den Hauptstromlichtbogen (I » 100 A) erhöht. Nach dem Zünden des Hauptstromlichtbogens wird nach dem Abwarten einer vorbestimmten Schweißzeit das Bauteil in Richtung auf die aufgeschmolzene Werkstückoberfläche bewegt und in die Schmelze eingetaucht. Nach dem Eintauchen wird der Schweißstrom ausgeschaltet und die Schweißung ist beendet.

In der Praxis hat sich jedoch gezeigt, daß beim Bolzenschweißen insbesondere dann Schweißungen ungenügender Qualität auftreten, wenn die Oberflächen der zu verschweißenden Teile Verunreinigungen aufweisen. Hierbei handelt es sich meist um Öl- oder Fettrückstände auf dem Werkstück, bei dem es sich beispielsweise um mittels eines Ziehvorgangs hergestellte Bleche handeln kann, die zu diesem Zweck mit einem Ziehfett versehen worden waren.

Darüber hinaus treten ähnliche Probleme bei einem Verschweißen beschichteter, beispielsweise verzinkter Teile auf. Auch das Vorhandensein von Rost oder Primer auf den zu verschweißenden Oberflächen kann zu negativen Beeinflussungen der Schweißqualität führen.

Es ist daher ebenfalls seit längerer Zeit bekannt, dem Vorstromlichtbogen Reinigungsimpulse mit hohen Spitzenstromstärken zu überlagern, um auf diese Weise eventuelle, auf den Oberflächen der zu verschweißenden Teile befindliche Verunreinigungen zu beseitigen (US 3 496 325).

Als nachteilig hierbei wurde jedoch empfunden, daß die Reinigungsimpulse entweder manuell oder selbsttätig bei jeder Schweißung, unabhängig von der Qualität der zu verschweißenden Oberflächen, ausgelöst wurden.

Aus diesem Grund wurde das in der EP 0 241 249 B1 beschriebene Steuergerät für das Bolzenschweißen entwickelt, bei welchen einem hochfrequent getakteten Schaltnetzteil als Schweißstromquelle eine vom Vorstromlichtbogen abgeleitete Spannung zugeführt wird. Daher wird der von dieser Schweißstromquelle gelieferte Schweißstrom durch die Überlagerung der vom Vorstromlichtbogen abgeleiteten Spannung zur Steuerspannung für das Schaltnetzteil abhängig vom Widerstandswert des Vorstromlichtbogens eingestellt. Auf diese Weise kann bei Erkennung unzureichender Qualitäten der zu verschweißenden Oberflächen durch die Messung der Spannung des Vorstromlichtbogens - wie dies bereits aus der DE 31 30 389 C2 bekannt war - eine Reinigung der Oberflächen durch das Erhöhen des Vorstroms für eine bestimmte Zeit erzielt werden.

Dieses Verfahren beruht im wesentlichen auf der bereits in der DE 31 30 389 C2 enthaltenen Erkenntnis, daß eine stark verschmutzte, z.B. verfettete Oberfläche, auf die Spannung des Vorstromlichtbogens einen deutlich meßbaren Einfluß hat, während die Spannung des Hauptstromlichtbogens hiervon praktisch unberührt bleibt.

Da bei diesen bekannten Schweißverfahren die erreichte Qualität der fertigen Schweißung anhand der Spannung des Vorstromlichtbogens abgeschätzt werden soll, ergibt sich eine relativ große Unsicherheit in der Beurteilung der erreichten Schweißqualität, da zwar unzureichend vorbereitete bzw. verunreinigte Oberflächen erkannt werden, die tatsächlich erreichte Verbesserung durch die Änderung des Schweißstroms (Strom des Vorstrom- bzw. Hauptstromlichtbogens) bzw. das Auslösen von Reinigungsimpulsen nicht überprüfbar ist.
Ausgehend von diesem Stand der Technik liegt der Erfindung die Aufgabe zugrunde, ein weiteres Schweißverfahren für das Hubzündungsbolzenschweißen zu schaffen, welches das Erkennen ungenügend vorbereiteter zu verschweißender Oberflächen ermöglicht und durch geeignete Maßnahmen deren Einfluß auf die Qualität der fertigen Schweißung reduziert. Darüber hinaus liegt der Erfindung die Aufgabe zugrunde, eine Vorrichtung zur Durchführung des Verfahrens zu schaffen.

Die Erfindung löst diese Aufgabe mit den Merkmalen der Patentansprüche 1 bzw. 15.

Ungenügend vorbereitete oder verunreinigte Oberflächen werden bei dem Verfahren nach der Erfindung durch die Messung der Spannung des Hauptstromlichtbogens erkannt und deren Einfluß auf die fertige Schweißung durch eine geeignete Steuerung oder Regelung des Stromverlaufs des Hauptstromlichtbogens reduziert.

Dabei geht die Erfindung von der Erkenntnis aus, daß sich entgegen der bisher herrschenden Meinung (DE 31 30 389 C2) unzureichend vorbereitete zu verschweißende oder verunreinigte Oberflächen auch in einem solchen Maß auf die Spannung des Hauptstromlichtbogens auswirken, daß diese meßtechnisch zuverlässig erfaßbar und im Sinne der Erfindung auswertbar sind.

In einer Ausführungsform der Erfindung wird die mittlere Spannung in einem kurzen Zeitintervall unmittelbar nach der Zündung des Hauptstromlichtbogens gemessen und abhängig hiervon der Stromverlauf des weiteren Hauptstromlichtbogens und/oder die Eintauchbewegung der zu verschweißenden Teile geregelt oder gesteuert.

Durch die Messung der mittleren Spannung ergibt sich der Vorteil einer höheren Genauigkeit und Reproduzierbarkeit des Meßwerts. Selbstverständlich ist dabei das Zeitintervall, über das die mittlere Spannung, beispielsweise durch Abtastung der Spannung in äquidistanten Intervallen, gemittelt wird, so kurz zu bemessen, daß ausreichend Zeit für die Beeinflussung des weiteren Hauptstromlichtbogens verbleibt, ohne daß sich hierdurch unzulässig hohe Schweißzeiten ergeben.

In der bevorzugten Ausführungsform der Erfindung wird bei Überschreiten und/oder Unterschreiten eines vorbestimmten Schwellenspannungswertes durch die gemessene mittlere Spannung ein zunächst vorbestimmter Verlauf für den Hauptschweißstrom verändert. Dabei wird die Veränderung des zunächst vorbestimmten Verlaufs vorzugsweise abhängig vom Betrag der Abweichung der mittleren Spannung von dem voreingestellten Schwellenspannungswert vorgenommen.

Bei der bevorzugten Ausführungsform der Erfindung wird bei Überschreiten der Schwellenspannung der Hauptstrom für die Zeit eines Reinigungsimpulses mit steilen Impulsflanken um einen ausreichenden Betrag erhöht (positiver Impuls) oder erniedrigt (negativer Impuls) oder zunächst erniedrigt, anschließend auf einen gegenüber dem anfänglichen Wert höheren Wert erhöht und am Ende der Dauer des negativ-positiven Reinigungsimpulses wieder auf den anfänglichen Wert erniedrigt, um durch den hierbei entstehenden Schalldruck eine Reinigung der zu verschweißenden Oberflächen zu bewirken. Dabei hat sich herausgestellt, daß sich insbesondere eine positive Flanke des Schweißstroms für die Reinigung der zu verschweißenden Oberflächen eignet.

Selbstverständlich kann anstelle des negativ-positiven Impulses jedoch auch ein positiv-negativer Impuls verwendet werden, bei dem der Strom zunächst erhöht, anschließend erniedrigt und schließlich wieder auf den anfänglichen Wert erhöht wird.

Nach dem Erzeugen eines Reinigungsimpulses wird vorzugsweise erneut die mittlere Spannung des Hauptstromlichtbogens gemessen, um festzustellen, ob der gewünschte Reinigungseffekt in ausreichendem Maß erzielt wurde. Wird nach wie vor eine zu hohe mittlere Spannung des Hauptstromlichtbogens detektiert, so wird das Verfahren des Erzeugens eines Reinigungsimpulses mit anschließender erneuter Kontrolle der Hauptstromlichtbogenspannung so lange wiederholt, bis die mittlere gemessene Spannung unterhalb des Schwellenspannungswertes liegt oder eine vorbestimmte Anzahl von Reinigungsimpulsen erreicht ist.

Dieses Verfahren gewährleistet den Vorteil, daß der Energieinhalt eines einzelnen Reinigungsimpulses auch bei stark verschmutzen Oberflächen relativ klein gehalten werden kann. Eine übermäßige Beeinträchtigung des Verlaufs des Hauptstromlichtbogens bzw. des Schweißprozesses kann so sicher vermieden werden.

Wird die vorbestimmte Anzahl von Reinigungsimpulsen erreicht, ohne daß die nach dem letzten Impuls gemessene mittlere Spannung des Hauptstromlichtbogens unter dem vorbestimmten Schwellenspannungswert liegt, so wird der Schweißvorgang vorzugsweise fortgesetzt, da aufgrund des anfänglich bereits relativ hohen Stroms des Hauptstromlichtbogens bereits ein Anschmelzen der zu verschweißenden Oberfläche erfolgt ist.

Zusätzlich kann in einem derartigen Fall jedoch ein Warnsignal erzeugt werden, oder der Schweißvorgang mit einer entsprechenden Fehlermeldung protokolliert werden.

Hierdurch ergibt sich der Vorteil, daß bei Schweißungen am selben Werkstück oder mit vergleichbaren Werkstücken eine entsprechende Statistik durch einfache Auswertung des Protokolls erstellt werden kann und abhängig hiervon geeignete Maßnahmen, beispielsweise ein Vorreinigen der Oberflächen oder Änderungen der Schweißparameter, vorgenommen werden können. Das Protokoll kann dabei selbstverständlich auch durch das Abspeichern von Meßwerten oder davon abzuleitenden Informationen geführt werden.

In einer Ausführungsform der Erfindung kann zur Erreichung einer möglichst hohen positiven Flanke selbsttätig entweder ein positiver oder negativer Reinigungsimpuls ausgewählt werden, wobei ein positiver Reinigungsimpuls erzeugt wird, wenn ein voreingestellter anfänglicher Hauptschweißstrom unterhalb eines vorbestimmten Wertes liegt, und ein negativer Reinigungsimpuls, wenn der voreingestellte anfängliche Hauptschweißstrom überhalb eines vorbestimmten Wertes liegt.

Ein negativ-positiver oder positiv-negativer Reinigungsimpuls kann selbstverständlich unabhängig von einem anfänglichen Hauptschweißstrom verwendet werden. Dabei ist der untere Stromwert bei einem positiv-negativen Reinigungsimpuls durch die Untergrenze des Bereichs für den Hauptschweißstrom der Hauptschweißstromquelle begrenzt, welche häufig getrennt von der Stromquelle zur Erzeugung des Vorstromlichtbogens ausgebildet ist.

Bei der bevorzugten Ausführungsform der Erfindung wird der Verlauf des Hauptstromlichtbogens abhängig von der Anzahl und dem positiven oder negativen Energieinhalt der Reinigungsimpulse und ggf. in Zeitabschnitten zwischen zwei Reinigungsimpulsen enthaltenen Energieinhalten korrigiert. Hierdurch wird sichergestellt, daß der Energieinhalt des tatsächlich durchgeführten Schweißvorgangs den Energieinhalt gemäß den ursprünglich voreingestellten Schweißparametern bzw. der voreingestellten Schweißkurve nicht in unzulässiger Weise über- oder unterschreitet.

Die Korrektur kann im einfachsten Fall in der Weise erfolgen, daß die Stromstärke des Hauptstromlichtbogens nach Beendigung der Reinigungsimpulse bei konstanter Dauer des Hauptstromlichtbogens erhöht oder erniedrigt oder die Dauer des Hauptstromlichtbogens bei konstanter Stromstärke des Hauptstromlichtbogens nach Beendigung der Reinigungsimpulse verlängert oder verkürzt wird.

In einer Ausführungsform der Erfindung kann der Hauptstromlichtbogen für die ein- oder mehrmalige Messung der mittleren Spannung mit einer von der späteren Stromstärke des Hauptstromlichtbogens unabhängigen konstanten anfänglichen Stromstärke gezündet werden. Hierdurch ergibt sich der Vorteil, daß bei festen Ober- und/oder Untergrenzen für die Stromstärke eines Reinigungsimpulses dieselbe Höhe der Impulsflanken ergibt, welche im wesentlichen für die Stärke der Reinigungswirkung verantwortlich ist.
Des weiteren ergibt sich der Vorteil, daß die Schwellenspannung nicht an unterschiedliche anfängliche Stromstärken des Hauptstromlichtbogens angepaßt werden muß, was grundsätzlich - beispielsweise durch die Verwendung einer entsprechenden Kennlinie - möglich wäre.

Bei der bevorzugten Ausführungsform des erfindungsgemäßen Verfahrens wird von der Abweichung der zuletzt gemessenen mittleren Spannung von einer Sollspannung ein Wert bzw. ganz allgemein eine Information für die Qualität der fertigen Schweißung abgeleitet.

Hierdurch ergibt sich der entscheidende Vorteil, daß nach Durchführung einer Reinigung der Oberflächen die Wirksamkeit dieser Maßnahme überprüfbar ist und sich gegenüber bekannten Verfahren eine zuverlässigere Aussage über die Qualität der fertigen Schweißung ableiten läßt.

Dieser Wert wird vorzugsweise auf einem für den Bediener des Schweißgeräts sichtbaren Display angezeigt. Er kann selbstverständlich statt dessen oder auch zusätzlich als zur betreffenden Schweißung zugehöriger Wert protokolliert werden.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine schematische Darstellung einer Bolzenschweißvorrichtung;
- Fig. 2: Diagramme mit Kurvenverläufen des Schweißstroms und der Lichtbogenspannung während des Schweißens gemäß einer ersten Ausführungsform des Schweißverfahrens nach der Erfindung und
- Fig. 3: Diagramme mit Kurvenverläufen des Schweißstroms und der Lichtbogenspannung während des Schweißens nach einer weiteren Ausführungsform des Bolzenschweißverfahrens nach der Erfindung.

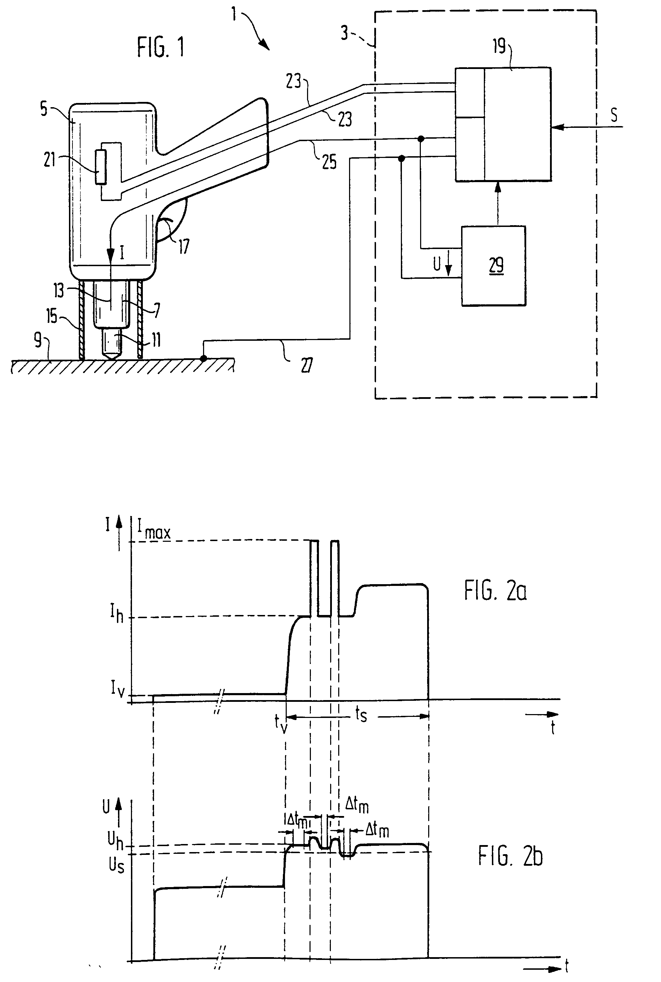

Die in Fig. 1 dargestellte Bolzenschweißvorrichtung 1 besteht in üblicher Weise aus einem Steuergerät 3 und einem damit verbundenen Bolzenschweißkopf 5, welcher - wie in Fig. 1 dargestellt - als Bolzenschweißpistole ausgebildet sein kann.

Der Bolzenschweißkopf 5 weist in seinem vorderen Bereich einen Bolzenhalter 7 auf, in welchem ein mit einem Werkstück 9 zu verschweißender Bolzen 11 gehalten und mit einer ersten, den Schweißstrom zuführenden Elektrode 13 verbunden ist. Der Bolzenhalter 7 mit dem darin gehaltenen Bolzen 9 ist innerhalb eines zylindrischen Rohrs 15 angeordnet, welches einerseits als Anschlag für das Aufsetzen des Schweißkopfs 5 auf die Werkstückoberfläche und andererseits als Schutz gegen das Berühren der spannungsführenden Teile dient.

Für die Durchführung eines Bolzenschweißvorgangs nach dem Hubzündungsverfahren wird in an sich bekannter Weise der Bolzen nach dem Aufsetzen des Schweißkopfs 5 auf die Oberfläche des Werkstücks 9 und dem Einschalten des Vorschweißstroms Iᵥ der Bolzen mittels des Bolzenhalters von der Werkstückoberfläche abgehoben, so daß ein sichtbogen mit relativ geringer Stromstärke (bis ca. 100 A), der sogenannte Vorstromlichtbogen, gezogen wird. Für das Zuführen des Vorschweißstroms Iᵥ weist der als Bolzenschweißpistole ausgebildete Bolzenschweißkopf 5 einen Auslöser 17 auf, der beispielsweise einen nicht dargestellten Schalter schließt. Das Schließen des Schalters wird von einer Stromversorgungs- und Steuereinheit 19 des Steuergeräts 3 über ebenfalls nicht dargestellte Steuerleitungen zwischen dem Bolzenschweißkopf 5 und dem Steuergerät 3 detektiert.

Nach einem Detektieren dieses Startsignals für einen Bolzenschweißvorgang wird mittels eines im Bolzenschweißkopf angeordneten Solenoids 21 der Bolzenhalter 7 mit dem Bolzen 11 vom Werkstück 9 abgehoben. Hierzu ist die Stromversorgungs- und Steuereinheit 19 über Verbindungsleitungen 23 mit dem Bolzenschweißkopf verbunden.

Selbstverständlich wurde vor dem Aktivieren des Solenoids 21 durch die Stromversorgungs- und Steuereinheit 19 unmittelbar nach dem Erzeugen des Startsignals S durch den Auslöser 17 der Vorschweißstrom Iᵥ eingeschaltet, welcher zunächst bei aufgesetztem Bolzen 11 über die erste Elektrodenleitung 25 vom Ausgang der Stromversorgungs- und Steuereinheit 19 über den Bolzen 11, das Werkstück 9 und einer damit verbundenen zweiten Elektrodenleitung 27 zurück zum Ausgang der Stromversorungs- und Steuereinheit 19 fließt. Dieses Erzeugen des Vorstromlichtbogens erfolgt somit in an sich bekannter Weise.

Die Stromversorgungs- und Steuereinheit 19 des Steuergeräts 3 umfaßt sämtliche für die Ansteuerung des Solenoids 21 sowie zur Erzeugung, Regelung und zur Steuerung des Schweißstroms erforderlichen Komponenten. Darüber hinaus beinhaltet die Stromversorgungs- und Steuereinheit 19 selbstverständlich auch Komponenten zur Einstellung und Speicherung von Schweißparametern, Schweißkurven und ggf. einem Speicher für das Protokollieren von Informationen eines oder mehrerer Schweißvorgänge.

Darüber hinaus umfaßt das Steuergerät 3 eine Meß- und Steuereinheit 29 zur Messung und Auswertung der Spannung U des Lichtbogens während eines Schweißvorganges, welche die Stromversorgungs- und Steuereinheit 19 in der nachstehend beschriebenen Weise ansteuert bzw. mit dieser zusammenwirkt. Im einfachsten Fall kann zur Messung der Lichtbogenspannung die Spannung U am mit den Elektrodenleitungen 25 bzw. 27 verbundenen Ausgang der Stromversorgungs- und Steuereinheit 19 abgegriffen und der Meß- und Steuereinheit 29 zugeführt werden. In diesem Fall kann die Meß- und Steuereinheit 29 die Spannung U selbstverständlich auch zu Zeiten außerhalb eines Schweißvorganges messen, so daß auf diese Weise für den Bediener der Vorrichtung gefährliche, durch Fehlfunktionen des Geräts hervorgerufene Spannungen detektiert werden können. In einem solchen Fall kann dann die Meß- und Steuereinheit 29 die Stromversorgungs- und Steuereinheit 19 derart ansteuern, daß eine Notabschaltung des gesamten Steuergeräts 3, zumindest aber ein Abschalten des Schweißausgangs der Stromversorgungs- und Steuereinheit 19, erfolgt.

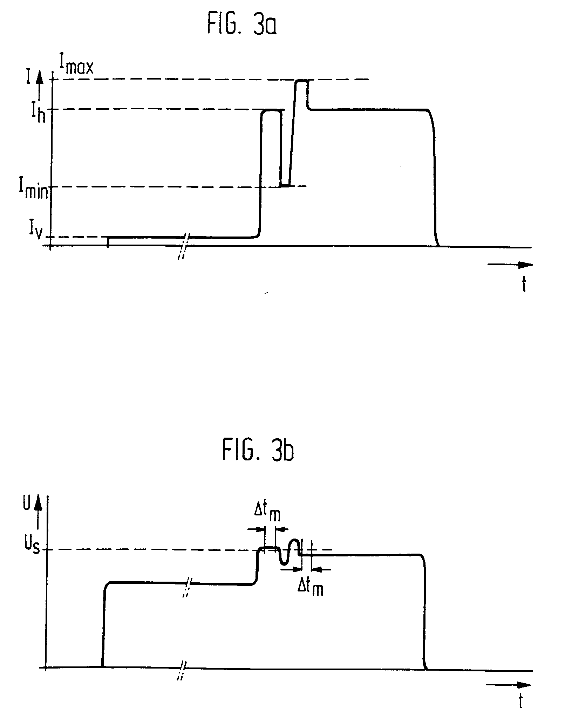

Die eigentliche Aufgabe der Meß- und Steuereinheit 29 beginnt jedoch erst nach dem Einschalten eines anfänglichen Hauptschweißstroms Iₕ nach der Zeit tᵥ, d.h. nach Ablauf der Vorschweißzeit bzw. nach dem Start des Hauptschweißvorgangs (Fig. 2a bzw. Fig. 3a).

Nach dem Einschalten des Hautstromlichtbogens mit dem anfänglichen Hauptschweißstrom Iₕ wird nach Abwarten einer Einschwingzeit während eines Meßzeitintervalls Δtₘ die zugehörige Spannung des Hauptstromlichtbogens Uₛ gemessen. Zur Erhöhung der Meßgenauigkeit und der Verbesserung der Reproduzierbarkeit der Messung erfolgt eine Mittelung der Spannung während des Meßzeitintervalls Δtₘ. Da zur Auswertung der gemessenen Spannung Uₛ mittels eines hierfür üblicherweise verwendeten Mikroprozessors in der Regel ohnehin eine Analog-Digitalwandlung der gemessenen Spannungswerte erfolgen muß, kann das Bilden der mittleren Spannung durch das Abtasten der Spannung Uₕ des Hauptstromlichtbogens in mehreren äquidistanten Zeitintervallen erfolgen und der Mittelwert durch einfache arithmetische Operationen mittels des Prozessors gebildet werden.

Da abhängig von den gemessenen Spannungswerten der Verlauf des Lichtbogens beeinflußt werden soll und der gesamte Hauptschweißvorgang vom Zünden des Hauptstromlichtbogens bis zum Eintauchen des Bolzens in den aufgeschmolzenen Bereich des Werkstücks nur einige Millisekunden bis einige 10 ms dauert, muß die Stromversorgungs- und Steuereinheit 19 eine Schweißstromquelle aufweisen, die eine sehr große Flankensteilheit beim Einschalten des Hauptschweißstroms Iₕ bzw. bei Änderungen des Hauptschweißstroms Iₕ gewährleistet.

Da die Spannung Uₕ des Hauptschweißlichtbogens gemäß der der Erfindung zugrundeliegenden Erkenntnis einen Rückschluß auf die Oberflächenbeschaffenheit der zu verschweißenden Teile, insbesondere des Werkstücks, zuläßt, kann nach der erstmaligen Messung der Spannung des Hauptstromlichtbogens Uₕ der weitere Hauptschweißvorgang durch eine gezielte Beeinflussung des Hauptschweißstroms Iₕ an die Beschaffenheit der Oberflächen der zu verschweißenden Werkstücke angepaßt werden.

So kann beispielsweise die Abweichung der tatsächlichen Spannung Uₕ des Hauptstromlichtbogens von einem voreingestellten Schwellenspannungswert Uₛ nach oben die Schweißzeit tₛ verlängert und/oder der Hauptschweißstrom Iₕ vergrößert werden, da eine gegenüber dem Fall ideal vorbereiteter Oberflächen erhöhte Spannung Uₕ des Hauptstromlichtbogens auf eine Verunreinigung der Oberflächen oder einer Beschichtung der Oberflächen hindeutet.

In gleicher Weise kann selbstverständlich bei Unterschreiten einer an "mittlere zulässige" Verschmutzungen angepaßten Schwellenspannung auch eine Verkürzung der Schweißzeit tₛ und/oder eine Verzögerung des Hauptschweißstroms erfolgen.

Selbstverständlich kann die Messung der Spannung des Hauptstromlichtbogens auch mehrmals wiederholt werden oder quasi-kontinuierlich erfolgen und abhängig hiervon die Stromstärke Iₕ und/oder die Dauer des Hauptstromlichtbogens bzw. der Kurvenverlauf der Stromstärke verändert werden.

Bei der bevorzugten Ausführungsform des erfindungsgemäßen Verfahrens gemäß Fig. 2 wird bei Detektieren einer gegenüber einer Schwellenspannung Uₛ erhöhten Spannung Uₕ (mittlere Spannung) einem voreingestellten Verlauf des Hauptstromlichtbogens ein Reinigungsimpuls überlagert. Hierfür wird, wie in Fig. 2a dargestellt, unmittelbar nach Beendigung und Auswertung der Messung der Spannung Uₕ des Hauptstromlichtbogens nach dessen Start der Hauptschweißstrom Iₕ mit einer sehr steilen Flanke auf einen sehr hohen Wert, vorzugsweise dem von der Schweißstromquelle lieferbaren Maximalwert Iₘₐₓ (oder dem am Schweißgerät voreingestellten späteren höheren Schweißstrom) erhöht und anschließend sofort wieder auf den anfänglichen Wert des Hauptschweißstroms Iₕ erniedrigt. Dabei bewirken die steilen Flanken, insbesondere die positive Flanke des Reinigungsimpulses, das Erzeugen eines Schalldrucks, der die auf den Oberflächen vorhandenen Schmutzpartikel explosionsartig auseinanderschleudert.

Fig. 2b zeigt, daß nach Beendigung des ersten Reinigungsimpulses, die während eines daran anschließenden Zeitintervalls Δtₘ erneut gemessene mittlere Spannung des Hauptstromlichtbogens Uₕ zwar gegenüber dem ursprünglich gemessenen Wert abgesunken ist, jedoch noch immer über dem voreingestellten Schwellenspannungswert Uₛ liegt. Bei dem dargestellten Schweißvorgang konnte hieraus somit gefolgert werden, daß die zu verschweißenden Oberflächen noch immer eine unzulässig hohe Verunreinigung aufweisen.

Demzufolge wurde nach dieser zweiten Messung der Spannung Uₕ des Hauptstromlichtbogens erneut ein weiterer Reinigungsimpuls gezündet.

Bei der anschließend an diesen Reinigungsimpuls erneut durchgeführten dritten Messung der Spannung Uₕ des Hauptstromlichtbogens wurde eine ausreichende Qualität der Oberflächen detektiert, da die gemessene Spannung unterhalb des Schwellenspannungswertes Uₛ lag. Somit konnte der verbleibende Teil des Hauptschweißvorgangs mit der in Fig. 2a dargestellten höheren Stromstärke weitergeführt und beendet werden. Dieses - erst nach Beendigung von ggf. erforderlichen Reinigungsimpulsen - Erhöhen der Hauptschweißstromstärke Iₕ hat den Vorteil, daß während der Zeit, in der die Reinigung der Oberflächen erfolgt, nur ein relativ geringes Aufschmelzen der Oberflächen bewirkt wird, wodurch die Verunreinigungen durch den Schalldruck der Reinigungsimpulse besser entfernbar sind, als wenn diese bereits in der Schmelze gefangen sind.

Das Überlagern von Reinigungsimpulsen wird vorzugsweise beendet, wenn - wie in Fig. 2 dargestellt - die nach dem letzten Reinigungsimpuls gemessene Spannung des Hauptstromlichtbogens unterhalb der voreingestellten Schwelle liegt oder wenn eine vorgegebene maximale Anzahl von Reinigungsimpulsen erreicht ist. In letzterem Fall wird der Schweißvorgang vorzugsweise selbst dann zu Ende geführt, wenn die zuletzt gemessene Spannung des Hauptstromlichtbogens noch über der voreingestellten Schwelle liegt. Denn bei einem Abbrechen des Schweißvorgangs könnte an der gleichen Stelle wegen des bereits erfolgten Anschmelzens der Oberfläche des Werkstücks und der hierdurch bedingten Oberflächenveränderung nur mit Schwierigkeiten ein neuer Schweißvorgang durchgeführt werden. Zudem könnte auch trotz des gemessenen "unzulässig hohen" Spannungswertes des Hauptstromlichtbogens eine Schweißung mit ausreichender Festigkeit entstehen.

Die Messung der Spannung nach der Durchführung des letzten Reinigungsimpulses hat gegenüber bekannten Verfahren den Vorteil, daß tatsächlich der Reinigungseffekt der Impulse überprüfbar ist und somit die Genauigkeit der Aussage über die Qualität der fertigen Schweißung steigt.

Wie in Fig. 3 dargestellt, kann der Reinigungsimpuls selbstverständlich auch derart ausgeführt sein, daß anstelle der in Fig. 2a dargestellten positiven Reinigungsimpulse zunächst der Strom des Hauptstromlichtbogens von einem anfänglichen Wert Iₕ auf den minimal möglichen Wert Iₘᵢₙ erniedrigt, anschließend sofort auf einen maximal möglichen Wert Iₘₐₓ erhöht und anschließend wieder auf den anfänglichen Wert verringert wird. Durch einen derartigen negativ-positiven Reinigungsimpuls ergibt sich der Vorteil einer wesentlich höheren positiven Flanke, was zu einem höheren Schalldruck und damit zu einer besseren Reinigungswirkung beiträgt. Selbstverständlich wäre es auch möglich, einen rein negativen Reinigungsimpuls oder einen positiv-negativen Reinigungsimpuls (zunächst Anstieg auf einen höheren, anschließend Abfall auf einen niedrigeren und schließlich Rückkehr zum ursprünglichen Wert) verwendet werden, wobei sich jedoch herausgestellt hat, daß eine möglichst hohe positive Flanke gegenüber einer gleich hohen negativen Flanke eine bessere Reinigungswirkung erzielt.

Da bei dem in Fig. 3 dargestellten Schweißvorgang bereits nach einem einmaligen Reinigungsimpuls die nach dem Reinigungsimpuls gemessene Spannung des Hauptstromlichtbogens unterhalb der voreingestellten Schwellenspannung Uₛ lag, konnte der Schweißvorgang ohne die Durchführung weiterer Reinigungsimpulse beendet werden.

Da sowohl durch die Reinigungsimpulse (zumindest während deren positiven Teile) als auch während den Zeitintervallen Δtₘ gegenüber einem Schweißvorgang ohne das Durchführen von Reinigungsimpulsen bzw. das Messen der Hauptstromlichtbogenspannung zusätzlich Energie zugeführt wird, wird diese Tatsache im folgenden Teil des Schweißvorgangs durch das Vorsehen entsprechender Korrekturmöglichkeiten berücksichtigt. Hierfür bietet sich beispielsweise an, die gegenüber einem Schweißvorgang ohne Reinigungsimpulse (hierbei ist lediglich eine einzige Messung der Hauptstromlichtbogenspannung während eines Zeitintervalls Δtₘ erforderlich) bis zur Beendigung der letzten Messung der Hauptstromlichtbogenspannung zusätzliche Energie zu ermitteln und abhängig hiervon den Verlauf des weiteren Hauptschweißvorgangs zu beeinflussen.

In der einfachsten Ausführungsform könnte beispielsweise der weitere Verlauf des Hauptschweißvorgangs so beeinflußt werden, daß der Energieinhalt des tatsächlich durchgeführten Schweißvorgangs mit dem Energieinhalt eines idealen Schweißvorgangs im wesentlichen übereinstimmt oder geringfügig höher ist, da ein bestimmter Energieinhalt für das Beseitigen der Verunreinigung erforderlich war. Der Energieinhalt des idealen Schweißvorgangs könnte beispielsweise durch die Berechnung des Energieinhalts eines Schweißvorgangs ohne Reinigungsimpuls in der Weise ermittelt werden, daß der ideale Stromverlauf (der durch die Regelung des Schweißstroms auch eingehalten wird) mit dem idealen Spannungsverlauf multipliziert und aus diesem zeitlichen Verlauf der Leistung durch Integration der Energieinhalt bestimmt wird. Als Spannungsverlauf kann dabei aus dem ersten gemessenen Spannungswert unter Berücksichtigung einer bekannten funktionalen Abhängigkeit der Schweißspannung vom Schweißstrom bestimmt oder aber die Spannung mittels der Meß- und Steuereinheit fortlaufend gemessen werden.

Im einfachsten Fall kann der in der vorstehend beschriebenen Weise ermittelte zusätzliche Energieinhalt durch eine Kürzung oder Verlängerung der Schweißzeit bzw. in der Erhöhung oder Erniedrigung des Hauptschweißstroms während der verbleibenden Schweißzeit korrigiert werden.

Damit schafft die Erfindung eine mit geringem Hardwareaufwand realisierbare Möglichkeit zur selbsttätigen Adaption der Schweißparameter bzw. des gesamten Schweißvorgangs an unterschiedliche Beschaffenheiten der zu verschweißenden Oberflächen.

## Patentansprüche

1. Schweißverfahren, für das Hubzündungsbolzenschweißen, bei dem
a) nach dem Zünden den Hauptstromlichtbogens dessen Spannung (Uₕ) gemessen und
b) abhängig von der gemessenen Spannung (Uₕ) der Stromverlauf des weiteren Hauptstromlichtbogens und/oder die Eintauchbewegung der zu verschweißenden Teile (9, 11) geregelt oder gesteuert wird.

2. Verfahren nach Anspruch 1, bei dem die mittlere Spannung (Uₕₘ) in einem kurzen Zeitintervall (Δtₘ) unmittelbar nach der Zündung des Hauptstromlichtbogens gemessen wird.

3. Verfahren nach Anspruch 1 oder 2, bei dem bei Überschreiten und/oder Unterschreiten eines vorbestimmten Schwellenspannungswertes durch Spannung (Uh) oder mittlere Spannung (Uₕₘ) ein vorbestimmter Verlauf des Hauptschweißstroms (Iₕ) verändert wird.

4. Verfahren nach Anspruch 3, bei dem die Veränderung abhängig vom Betrag der Abweichung der mittleren Spannung (Uₕₘ) von dem Schwellenspannungswert (Uₛ) erfolgt.

5. Verfahren nach Anspruch 3 oder 4, bei dem bei Überschreiten der Schwellenspannung (Uₛ) der Hauptstrom (Iₕ) für die Zeit eines Reinigungsimpulses mit steilen Impulsflanken um einen ausreichenden Betrag erhöht (positiver Impuls) oder erniedrigt (negativer Impuls) oder erniedrigt, anschließend erhöht und am Ende der Dauer des Reinigungsimpulses wieder auf den anfänglichen Wert erniedrigt (negativer-positiver Impuls) wird, um eine Reinigung der zu verschweißenden Oberflächen zu bewirken.

6. Verfahren nach Anspruch 5, bei dem nach einem Reinigungsimpuls erneut die Spannung (Uₕ) oder die mittlere Spannung (Uₕₘ) des Hauptstromlichtbogens gemessen wird und das Verfahren gemäß Anspruch 5 so oft wiederholt wird, bis die Spannung (Uₕ) oder die mittlere Spannung (Uₕₘ) unterhalb des Schwellenspannungswertes (Uₛ) liegt oder eine vorbestimmte Anzahl von Reinigungsimpulsen erreicht ist.

7. Verfahren nach Anspruch 6, bei dem nach Erreichen der vorbestimmten Anzahl von Reinigungsimpulsen, ohne daß die nach dem letzten Impuls gemessene Spannung (Uₕ) oder mittlere Spannung (Uₕₘ) des Hauptstromlichtbogens unter dem vorbestimmten Schwellenspannungswert liegt (Uₛ), der Schweißvorgang fortgesetzt wird.

8. Verfahren nach Anspruch 7, bei dem zusätzlich ein Warnsignal erzeugt und/oder der Schweißvorgang mit einer Fehlermeldung protokolliert wird.

9. Verfahren nach einem der Ansprüche 5 bis 8, bei dem ein positiver Reinigungsimpuls erzeugt wird, wenn ein voreingestellter anfänglicher Hauptschweißstrom (Iₕ) unterhalb eines vorbestimmten Wertes liegt, und ein negativer Reinigungsimpuls erzeugt wird, wenn der voreingestellte anfängliche Hauptschweißstrom (Iₕ) oberhalb eines vorbestimmten Wertes liegt.

10. Verfahren nach einem der Ansprüche 5 bis 9, bei dem der Verlauf des Hauptstromlichtbogens abhängig von der Anzahl und dem positiven oder negativen Energieinhalt des oder der Reinigungsimpulse und ggf. in Zeitabschnitten zwischen zwei Reinigungsimpulsen enthaltenen Energieinhalten) korrigiert wird.

11. Verfahren nach Anspruch 10, bei dem die Korrektur derart erfolgt, daß der Gesamtenergieinhalt des Hauptstromlichtbogens gegenüber einen idealen Schweißvorgang ohne Reinigungsimpulse im wesentlichen konstant gehalten wird.

12. Verfahren nach Anspruch 11, bei dem die Stromstärke (Iₕ) des Hauptstromlichtbogens nach Beendigung der Reinigungsimpulse bei konstanter Dauer des Hauptstromlichtbogens erhöht oder erniedrigt oder die Dauer (tₛ) des Hauptstromlichtbogens bei konstanter Stromstärke (Iₕ) des Hauptstromlichtbogens nach Beendigung der Reinigungsimpulse verlängert oder verkürzt wird.

13. Verfahren nach einem der Ansprüche 5 bis 12, bei dem Hauptstromlichtbogen für die ein- oder mehrmalige Messung der Spannung (Uₕ) oder der mittleren Spannung (Uₕₘ) mit einer von der späteren Stromstärke des Hauptstromlichtbogens unabhängigen konstanten anfänglichen Stromstärke (Iₕ) gezündet wird.

14. Verfahren nach Anspruch 13, bei dem die anfängliche Stromstärke im Bereich von 100 A bis 400 A liegt.

15. Verfahren nach einem der Ansprüche 5 bis 14, bei dem von der Abweichung der zuletzt gemessenen Spannung (Uₕ) oder der mittleren Spannung (Uₕₘ) von einer Sollspannung oder der Schwellenspannung (Uₛ) oder eine Information für die Qualität ein Wert für die Qualität der fertigen Schweißung abgeleitet wird.

16. Verfahren nach Anspruch 15, bei dem der Wert oder die Information angezeigt und/ oder zugehörig zur Schweißung protokolliert wird.

17. Vorrichtung für das Hubzündungsbolzenschweißen, mit wenigstens einem Bolzenschweißkopf (5) und einer Stromversorgungs- und Steuereinheit (19) sowie einer Meß- und Steuereinheit (29), welche den Schweißstrom (Iₕ) dem Verfahren nach einem der vorhergehenden Ansprüche regelt oder steuert.
